# EUROPÄISCHE PATENTSCHRIFT

(11) **EP 1 302 380 B1**
(45) Veröffentlichungstag und Bekanntmachung des Hinweises auf die Patenterteilung: **02.03.2005**
(21) Anmeldenummer: 02020193.5
(22) Anmeldetag: 10.09.2002
(51) Int. Cl.: B60T 10/02

(54) **Hydrodynamischer Retarder und Verfahren zum Betreiben eines hydrodynamischen Retarders für ein Kraftfahrzeug**
Hydrodynamic retarder and method of operating a vehicle hydrodynamic retarder
Ralentisseur hydrodynamique et méthode de controle d'un ralentisseur hydrodynamique d'un véhichule automobile

(30) Priorität: 14.09.2001 DE 10145281
(43) Veröffentlichungstag der Anmeldung: 16.04.2003
(73) Patentinhaber: ZF FRIEDRICHSHAFEN AG, 88038 Friedrichshafen (DE)
(72) Erfinder: Sauter, Frank, 88074 Meckenbeuren (DE)

(56) Entgegenhaltungen:
- DE-C- 19 853 830
- GB-A- 1 189 535
- GB-A- 1 217 540
- US-A- 3 744 598
- US-A- 4 538 553

## Beschreibung

Die vorliegende Erfindung betrifft einen hydrodynamischen Retarder einer Bremsanlage für ein Kraftfahrzeug gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardern und Motorbremsen können dazu verwendet werden, die Fahrzeuggeschwindigkeit im Gefälle konstant zu halten.

Zu den Retardern werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einer sich im Leistungsfluß befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Ein Beispiel einer Bremsanlage mit einem hydrodynamischen Retarder ist in der DE-C-198 53 830 beschrieben. Der hydrodynamische Retarder weist dabei einen Rotor und einen Stator auf, die ihrerseits einen Arbeitsraum miteinander bilden sowie eine Kühleinrichtung zum Kühlen des Arbeitsmediums, einen Vorratsbehälter zur Aufnahme des Arbeitsmediums und eine Steuereinrichtung zum Aufbringen eines Druckes auf das im Vorratsbehälter enthaltene Arbeitsmedium zwecks Einstellens des Füllungsgrades des Arbeitsraumes, wobei Retarder und Kühleinrichtung im Bremsbetrieb in Sinne eines Kreislaufes vom Arbeitsmedium durchströmt werden. Das gesamte im Vorratsbehälter enthaltene Arbeitsmedium wird zur besseren Wärmeabfuhr in den Kreislauf eingebracht, wobei der Vorratsbehälter als Bestandteil des Kreislaufes durchströmt wird. Damit wird erreicht, dass sich das Arbeitsmedium aufgrund der nunmehr größeren aktiven Menge langsamer erwärmt, da die im Vorratsbehälter verbleibende Menge des Arbeitsmediums, die bis zu 50 % der Gesamtölmenge betragen kann, zur Wärmeabfuhr mit herangezogen wird.

Nach dem Stand der Technik wird zur schnellen Befüllung des Retarderkreislaufes und damit zur Sicherstellung einer geringen Ansprechzeit ein pneumatischer Ölspeicher oder ein hydraulischer Volumenübersetzer verwendet. Beim Betätigen des Retarders wird der Ölinhalt des Speichers in den Kreislauf gepresst.

Diese bekannte Anordnung weist jedoch ein Wiederansprechverhalten auf, das bei kurzfristig aufeinanderfolgenden Bremsungen nicht ausreicht, um eine gleichbleibende effektive Bremsleistung zu erzielen. Dies liegt darin, dass unmittelbar nach einer Bremsung der Speicher für das Arbeitsmedium (Strömungsmittel) noch nicht vollständig wiederbefüllt ist. Hierbei hängt die Ansprechzeit des Retarders von seiner Ausschaltzeit sowie der Fahrgeschwindigkeit bzw. der Pumpenfördermenge ab.

Um diesen Nachteil zu vermeiden, ist vorgeschlagen worden, einen federunterstützten (selbstansaugenden) Speicher für das Arbeitsmedium mit zwei Rückschlagventilen einzusetzen. Der Speicher wird mit einem elektromagnetischen Pneumatikventil (auch Speicherladeventil SPLV genannt) derart angesteuert, dass nach der Befüllphase das Ventil wieder abgeschaltet wird, mit der Folge dass sich der Speicher selbst füllt, sodass bei einer erneuten Bremsung ein vollgefüllter Speicher zur Verfügung steht. Diese Konstruktion weist den Nachteil auf, dass ein elektromagnetisches Ventil relativ teuer ist.

Die Verwendung eines kostengünstigeren hydraulisch angesteuerten Ventils ist im Rahmen dieser Lösung nicht möglich, da das Hydraulikventil nicht unabhängig vom Retarder abgeschaltet werden kann.

Der vorliegenden Erfindung liegt die Aufgabe zugrunde, einen hydrodynamischen Retarder mit einer Ventilanordnung zur Befüllung eines pneumatischen Speichers oder eines als Speicher fungierenden hydraulischen Volumenübersetzers insbesondere während der Bremsphase anzugeben, wobei das Ventil (Speicherladeventil SPLV) hydraulisch angesteuert wird. Des weiteren soll die Speicherbefüllung unmittelbar nach dem Entleeren desselben erfolgen, so dass kein Zeitverlust verursacht wird.

Zudem soll ein Verfahren zum Betreiben eines hydrodynamischen Retarders und insbesondere zur Wiederbefüllung eines pneumatischen Speichers oder eines hydraulischen Volumenübersetzers während der Bremsphase angegeben werden, welches kein elektromagnetisches Speicherladeventil benötigt.

Diese Aufgabe wird für einen mit der erfindungsgemäßen Anordnung versehenen Retarder durch die Merkmale des kennzeichnenden Teils des Patentanspruchs 1 gelöst. Ein Verfahren wird im Rahmen des Patentanspruchs 8 angegeben. Weitere Ausgestaltungen gehen aus den entsprechenden Unteransprüchen hervor.

Demnach wird für den Fall eines mit einem selbstansaugenden pneumatischen Ölspeicher oder mit einem Volumenübersetzer versehenen hydrodynamischen Retarders vorgeschlagen, ein hydraulisch angesteuertes Speicherladeventil in Kombination mit einem vorgeschalteten 3/2-Wegeventil einzusetzen.

Hierbei kann der Ansteuerdruck durch den Vorsteuerdruck, den Retarderdruck oder den Hauptdruck erfolgen.

Erfindungsgemäß ist das vorgeschaltete 3/2-Wegeventil mechanisch oder hydraulisch schaltbar. Zudem ist das vorgeschaltete 3/2-Wegeventil hydraulisch selbsthaltend.

Im Rahmen einer besonders vorteilhaften Variante der vorliegenden Erfindung sind das 3/2-Wegeventil und das hydraulisch angesteuerte Speicherladeventil zu einer Baueinheit zusammenfassbar.

Die erfindungsgemäße Anordnung weist neben der sehr kurzen Ansprechzeit des Retarders den Vorteil auf, dass kein magnetisches Ventil benötigt wird, wodurch die Herstellungskosten erheblich sinken. Zudem entfällt auch eine entsprechende aufwendige Verkabelung sowie Ausgänge und Verbindungen mit der Elektronik.

Die Erfindung wird im folgenden anhand der beigefügten Zeichnung näher erläutert.
In dieser stellen dar:
- Fig. 1: eine schematische Darstellung der erfindungsgemäßen Ventilanordnung zur Wiederbefüllung eines pneumatischen Speichers im ausgeschalteten Zustand des Retarders;
- Fig. 2: eine schematische Darstellung der erfindungsgemäßen Ventilanordnung zur Wiederbefüllung eines pneumatischen Speichers während der Befüllphase des Retarders;
- Fig. 3: eine schematische Darstellung der erfindungsgemäßen Ventilanordnung zur Wiederbefüllung eines pneumatischen Speichers während der Wiederbefüllung im Retarderbetrieb und
- Fig. 4: eine schematische Darstellung der erfindungsgemäßen Ventilanordnung zur Wiederbefüllung eines Volumenübersetzers im ausgeschalteten Zustand des Retarders.

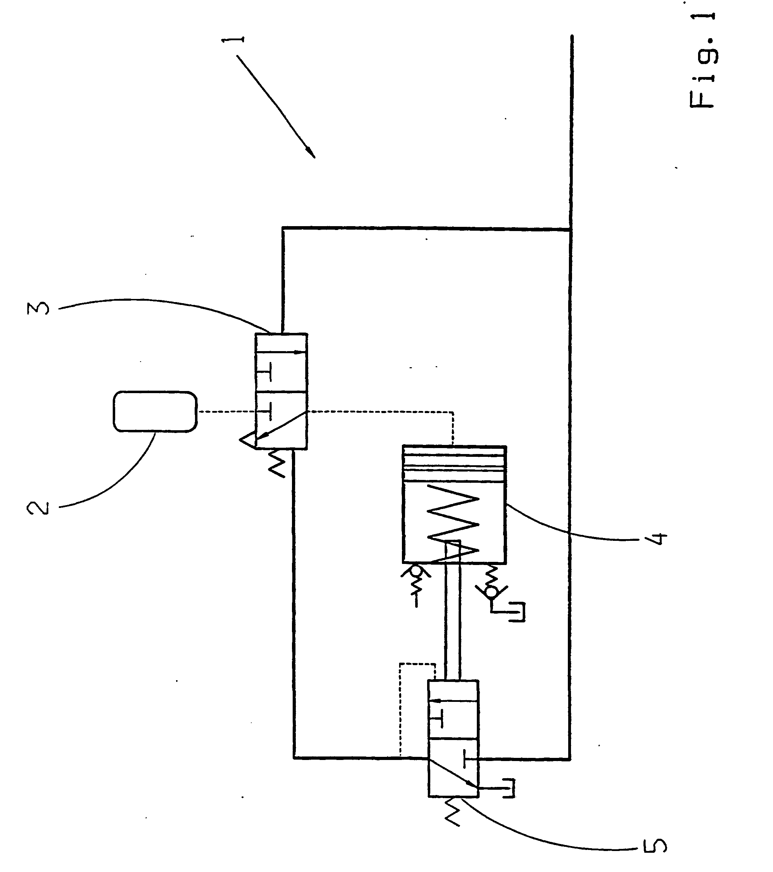

In Fig. 1 ist eine Ventilanordnung 1 mit einem Pneumatiksystem 2 und einem damit verbundenen hydraulisch angesteuertem Speicherladeventil 3 zum Befüllen eines Federspeichers 4 gezeigt. Erfindungsgemäß ist ein vorgeschaltetes 3/2-Wegeventil 5 vorgesehen, welches in Kombination mit dem Speicherladeventil 3 eine schnelle Befüllung auch während des Betriebs ermöglicht. In der Darstellung wird auf dem Fachmann bestens bekannte, übliche Merkmale eines hydrodynamischen Retarders, wie Rotor, Stator, Retardergehäuse verzichtet.

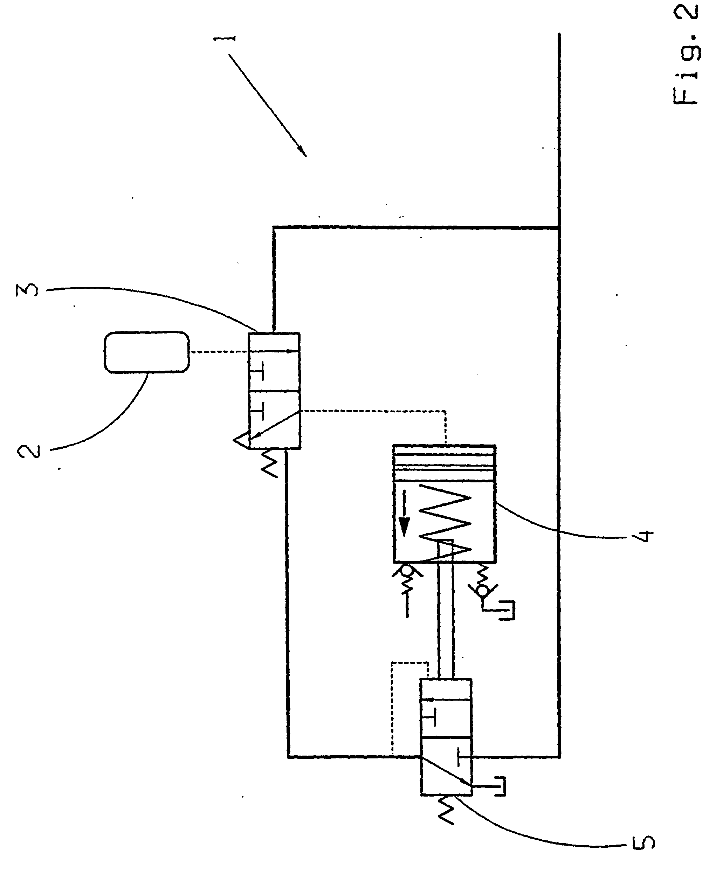

In Fig. 2 ist die Anordnung aus Fig. 1 während der Befüllphase des Retarders gezeigt. Hierbei wird das hydraulisch angesteuerte Speicherladeventil 3 durch den Steuerdruck des Retarders geschaltet, derart, dass der Federspeicher 4 durch den Luftdruck des Pneumatiksystems 2 beaufschlagt wird. Folglich wird der Ölinhalt bzw. Arbeitsmediuminhalt des Speichers 4 in den Retarder gefördert.

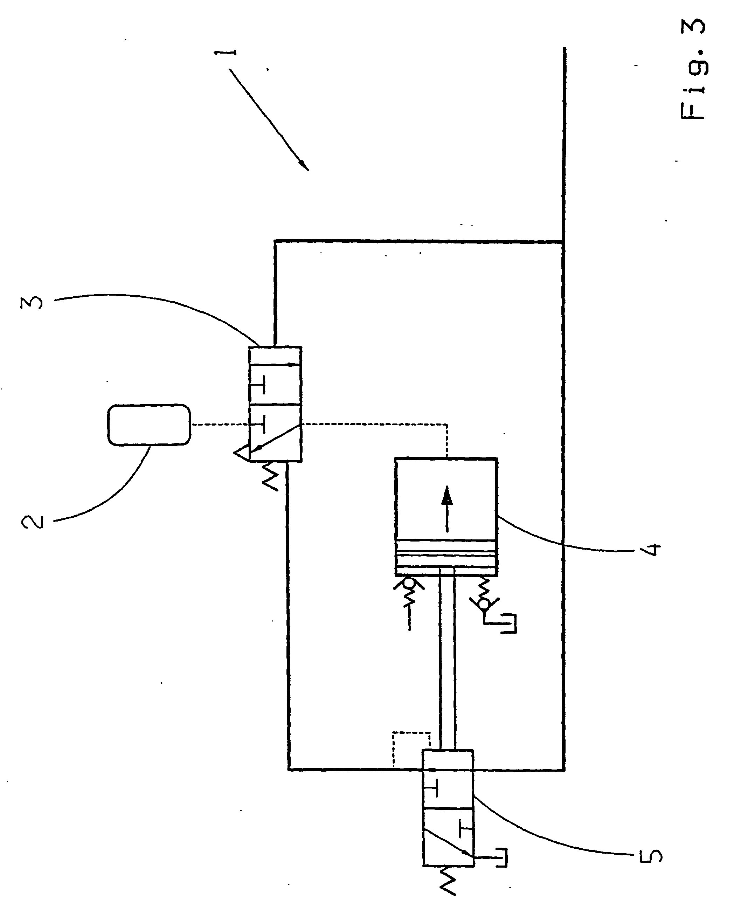

Wenn der Kolben des Speichers 4 seine Endlage erreicht hat, also wenn der Speicher leer ist, wird das 3/2-Wegeventil 5 mechanisch umgeschaltet. Dadurch wird der Steuerdruck des Retarders auf die gegenüberliegende-Kolbenseite des hydraulischen Speicherladeventils 3 geschaltet, das - da die hydraulischen Drücke ausgeglichen sind - infolge der entstehenden Federkraft in seine Ausgangsstellung zurückgeschaltet wird. Dadurch kann die im Speicher 4 enthaltene Luft des Pneumatiksystems entweichen, wobei die Befüllung des Speichers 4 mit dem Arbeitsmedium bzw. Öl selbstständig aus dem Ölsumpf erfolgt. Diese Situation ist in Fig. 3 dargestellt; der eingezeichnete Pfeil verdeutlicht die Richtung der Kolbenbewegung im Federspeicher 4.

Hierbei wird der Arbeitsdruck des vorgeschalteten 3/2-Wegeventils mit der zweiten Kolbenseite verbunden, sodass nach einer ersten mechanischen Betätigung des Ventils durch den Speicherkolben eine hydraulische Selbsthaltung des Ventils eintritt, welche erst nach Unterschreiten eines durch die Feder des 3/2-Wegeventils 5 vorgegebenen Druckniveaus wieder aufgehoben wird. Das Druckniveau wird erfindungsgemäß so gewählt, dass es unterhalb des kleinsten Einschaltdruckes des Retarders liegt.

Gemäß einer weiteren Ausführungsform der vorliegenden Erfindung wird die hier vorgestellte Anordnung bzw. Kombination aus einem 3/2-Wegeventil 5 mit einem hydraulisch angesteuertem Speicherladeventil 3 zur Ansteuerung eines Retarders mit einem hydraulischen Volumenübersetzer angewendet werden.

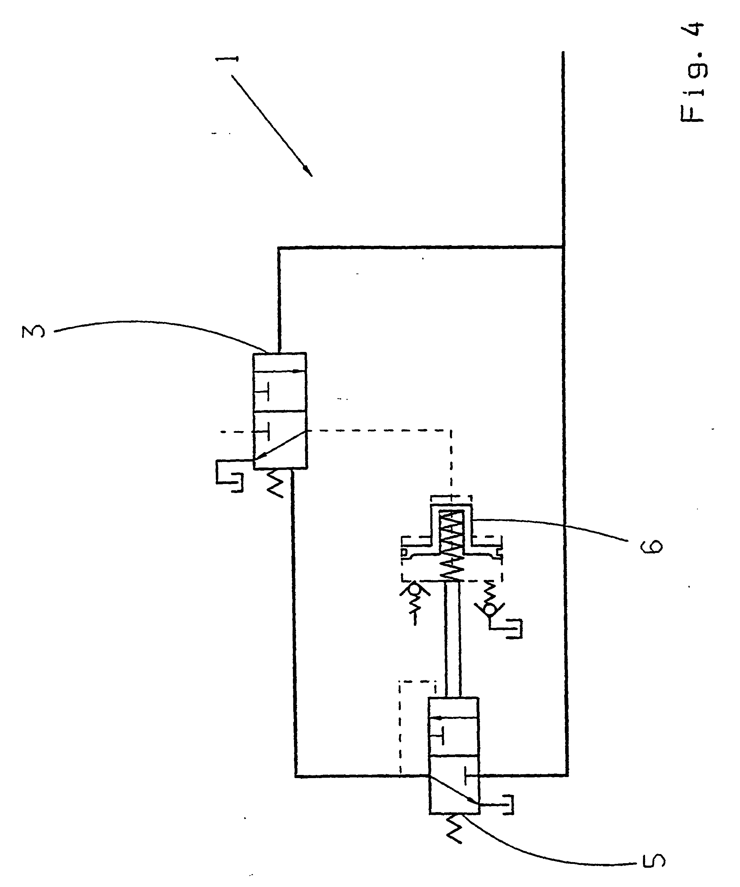

Dies wird in Fig. 4 verdeutlicht. In diesem Fall wird das 3/2-Wegeventil 5 hydraulisch angesteuert.

Durch die erfindungsgemäße Ventilanordnung und das entsprechende Verfahren wird eine schnelle Wiederbefüllung während des Retarderbetriebs gewährleistet, bei einer gleichzeitigen Senkung der Kosten aufgrund der Verwendung eines hydraulisch geschalteten Speicherladeventils.

### Bezugszeichen

- 1: Ventilanordnung
- 2: Pneumatiksystem
- 3: Speicherladeventil
- 4: Federspeicher
- 5: 3/2-Wegeventil
- 6: Volumenübersetzer

## Patentansprüche

1. Hydrodynamischer Retarder für ein Kraftfahrzeug mit einem Rotor, einem Stator, einem Speicher (4) für das Arbeitsmedium und einem mit dem Speicher (4) verbundenen Pneumatiksystem (2) oder einem Volumenübersetzer (6) und einem mit dem Pneumatiksystem (2) bzw. dem Volumenübersetzer (6) verbundenen Speicherladeventil (3), **dadurch gekennzeichnet, dass** das Speicherladeventil (3) hydraulisch ansteuerbar ist und dass ein vorgeschaltetes 3/2-Wegeventil (5) vorgesehen ist, derart, dass eine Wiederbefüllung des Speichers (4) bzw. des Volumenübersetzers (6) während des Retarderbetriebs ermöglicht wird.

2. Hydrodynamischer Retarder nach Anspruch 1, **dadurch gekennzeichnet, dass** das vorgeschaltete 3/2-Wegeventil (5) mechanisch schaltbar ist.

3. Hydrodynamischer Retarder nach Anspruch 1, **dadurch gekennzeichnet, dass** das vorgeschaltete 3/2-Wegeventil (5) hydraulisch umschaltbar ist.

4. Hydrodynamischer Retarder nach Anspruch 1, 2 oder 3, **dadurch gekennzeichnet, dass** das vorgeschaltete 3/2-Wegeventil (5) hydraulisch selbsthaltend ist.

5. Hydrodynamischer Retarder nach Anspruch 4, **dadurch gekennzeichnet, dass** die selbsthaltende Wirkung des vorgeschalteten 3/2-Wegeventils (5) unterhalb des kleinsten Druckniveaus des Ansteuerdrucks aufgehoben wird.

6. Hydrodynamischer Retarder nach Anspruch 5, **dadurch gekennzeichnet, dass** der Ansteuerdruck durch den Vorsteuerdruck, den Retarderdruck oder den Hauptdruck erfolgt.

7. Hydrodynamischer Retarder nach einem der vorangehenden Ansprüche, **dadurch gekennzeichnet, dass** das Speicherladeventil (3) und das 3/2-Wegeventil (5) eine Baueinheit bilden.

8. Verfahren zum Betreiben eines hydrodynamischen Retarders für ein Kraftfahrzeug mit einem Rotor, einem Stator, einem Speicher (4) für das Arbeitsmedium und einem mit dem Speicher (4) verbundenen Pneumatiksystem (2) und einem mit dem Pneumatiksystem (2) verbundenen Speicherladeventil (3), wobei ein vorgeschaltetes 3/2-Wegeventil (5) vorgesehen ist, **dadurch gekennzeichnet, dass** das hydraulisch angesteuerte Speicherladeventil (3) durch den Steuerdruck des Retarders geschaltet wird, wobei der Speicher (4) durch den Luftdruck des Pneumatiksystems (2) beaufschlagt wird, wonach der Arbeitsmediuminhalt des Speichers (4) in den Retarder gefördert wird und dass anschließend, wenn der Speicher leer ist, das 3/2-Wegeventil (5) mechanisch umgeschaltet wird, wodurch der Druck derart auf das Speicherladeventil (3) wirkt, dass es in seine Ausgangsstellung zurückgeschaltet wird, so dass die im Speicher (4) enthaltene Luft über das Speicherladeventil (3) entweicht und die Befüllung des Speichers (4) mit dem Arbeitsmedium selbstständig aus dem Ölsumpf erfolgt.

9. Verfahren nach Anspruch 8, **dadurch gekennzeichnet, dass** der Arbeitsdruck des vorgeschalteten 3/2-Wegeventils (5) mit der zweiten Kolbenseite des Kolbens des Speichers (4) verbunden ist, sodass nach einer ersten mechanischen Betätigung des 3/2-Wegeventils (5) durch den Speicherkolben eine hydraulische Selbsthaltung des 3/2-Wegeventils (5) eintritt, die nach Unterschreiten eines durch die Feder des 3/2-Wegeventils (5) vorgegebenen Druckniveaus wieder aufgehoben wird.

10. Verfahren nach Anspruch 8 oder 9, **dadurch gekennzeichnet, dass** anstelle des Pneumatiksystems (2) und des Speichers (4) ein Volumenübersetzer (6) verwendet wird.

## Claims

1. Hydrodynamic retarder for a motor vehicle equipped with a rotor, a stator, a reservoir (4) for the operating medium and a reservoir (4) linked to the pneumatic system (2), or a volume processor (6) and equipped with an accumulator charge valve (3) connected with the volume processor (6) and/or the pneumatic system (2) **characterized in that** the accumulator charge valve (3) can be activated hydraulically and that an upstream 3/2 direction control valve (5) is included in the design, namely in such a way that it is possible to refill the reservoir (4) and/or the volume processor (6) during retarder operation.

2. Hydrodynamic retarder according to claim 1, **characterized in that** the upstream 3/2 direction control valve (5) can be activated mechanically.

3. Hydrodynamic retarder according to claim 1, **characterized in that** the upstream 3/2 direction control valve (5) can be switched hydraulically.

4. Hydrodynamic retarder according to claim 1, 2, or 3, **characterized in that** the upstream 3/2 direction control valve (5) is hydraulically self-retaining.

5. Hydrodynamic retarder according to claim 4, **characterized in that** the self-retaining activity of the upstream 3/2 direction control valve (5) is revoked below the minimum pressure value level of the actuating control pressure.

6. Hydrodynamic retarder according to claim 5, **characterized in that** the actuating control pressure results from the pilot control pressure, the retarder pressure, or the main pressure.

7. Hydrodynamic retarder according to one of the previous claims, **characterized in that** the accumulator charge valve (3) and the 3/2 direction control valve (5) form an assembly unit.

8. Procedure for operating an hydrodynamic retarder for a motor vehicle equipped with a rotor, a stator, a reservoir (4) for the operating medium and a pneumatic system (2) linked with the reservoir (4) and an accumulator charge valve (3) connected with the pneumatic system (2) where an upstream 3/2 direction control valve (5) is included in the design. This procedure is **characterized in that** the accumulator charge valve (3) actuated hydraulically is switched by the control pressure of the retarder whereas the reservoir (4) is pressurized by the pneumatic system's (2) atmospheric pressure whereby the content of the operating medium of the reservoir (4) is transferred into the retarder and afterwards - as soon as the reservoir is empty - the 3/2 direction control valve (5) is switched manually. Thus, the pressure affects the accumulator charge valve (3) leading to it being shifted down in such a way that the air contained in the reservoir (4) exhausts via the accumulator charge valve (3). The reservoir (4) is now filled autonomously with the operating medium from the oil sump.

9. Procedure according to claim 8, **characterized in that** the operating pressure of the 3/2 direction control valve (5) is connected with the second side of the piston of the reservoir (4) so that an hydraulic self-retaining mechanism of the 3/2 direction control valve (5) will start after actuating the 3/2 direction control valve (5) mechanically for the first time. This hydraulic self-retaining mechanism will be revoked as soon as the pressure level preset by the 3/2 direction control valve's (5) spring is undershot.

10. Procedure according to claim 8 or 9, **characterized in that** a volume processor (6) is used instead of the pneumatic system (2) and the reservoir (4).

## Revendications

1. Ralentisseur hydrodynamique d'un véhicule automobile, doté d'un rotor, d'un stator, d'un accumulateur (4) contenant le fluide de travail, et d'un système pneumatique (2) connecté à l'accumulateur (4) ou d'un intensificateur de la pression hydraulique (6) et d'une valve de remplissage de l'accumulateur (3) connecté respectivement au système pneumatique (2) et à l'intensificateur (6), **caractérisé en ce que** la valve de remplissage de l'accumulateur (3) peut être pilotée par voie hydraulique et **en ce que** est prévu un distributeur 3/2 (5) monté en amont de façon à ce que la recharge de l'accumulateur (4) et/ou de l'intensificateur (6) est possible, le ralentisseur étant en service.

2. Ralentisseur hydrodynamique selon la revendication 1, **caractérisé en ce que** le distributeur 3/2 monté en amont (5) peut être actionné mécaniquement.

3. Ralentisseur hydrodynamique selon la revendication 1, **caractérisé en ce que** le distributeur 3/2 monté en amont (5) peut être commuté hydrauliquement.

4. Ralentisseur hydrodynamique selon les revendications 1, 2 ou 3, **caractérisé en ce que** le distributeur 3/2 monté en amont (5) est un distributeur à verrouillage hydraulique.

5. Ralentisseur hydrodynamique selon la revendication 4, **caractérisé en ce que** l'effet de verrouillage du distributeur 3/2 monté en amont (5) est annulé en dessous du niveau de pression de pilotage minimal.

6. Ralentisseur hydrodynamique selon la revendication 5, **caractérisé en ce que** la pression de pilotage est générée par la pression pilote, la pression du ralentisseur ou la pression principale.

7. Ralentisseur hydrodynamique selon une des revendications précédentes, **caractérisé en ce que** la valve de remplissage de l'accumulateur (3) et le distributeur 3/2 (5) forment une unité.

8. Méthode d'actionnement d'un ralentisseur hydrodynamique d'un véhicule automobile, doté d'un rotor, d'un stator, d'un accumulateur (4) contenant le fluide de travail et d'un système pneumatique (2) connecté à l'accumulateur (4) ou d'une valve de remplissage de l'accumulateur (3) connecté au système pneumatique (2), sachant que le distributeur 3/2 monté en amont (5) est **caractérisé en ce que** la valve de remplissage de l'accumulateur (3) pilotée par voie hydraulique (3) est ouverte ou fermée par la pression de commande du ralentisseur, sachant que l'accumulateur (4) est pressurisé par la pression d'air du système pneumatique (2), permettant de refouler le liquide de travail contenu dans l'accumulateur (4) dans le ralentisseur et de commuter ensuite, dès que l'accumulateur est vide, le distributeur 3/2 par voie mécanique, ayant comme conséquence que la pression agit de telle manière sur la valve de remplissage de l'accumulateur (3) que celle-ci revient en sa position de repos, si bien que l'air contenu dans l'accumulateur (4) se dégage par la valve de remplissage de l'accumulateur (3) et le remplissage de l'accumulateur (4) avec le liquide de travail s'effectue indépendamment à partir du bac à huile.

9. Méthode selon la revendication 8, **caractérisée en ce que** la pression de service du distributeur 3/2 monté en amont (5) est liée à la deuxième face du piston de l'accumulateur (4), de façon à ce que après un premier actionnement mécanique du distributeur 3/2 (5) par l'intermédiaire du piston de l'accumulateur, est opéré un verrouillage hydraulique du distributeur 3/2, qui est annulé dès qu'un niveau de pression prédéfini par un ressort du distributeur 3/2 (5) est sous-dépassé.

10. Méthode selon la revendication 8 ou 9, **caractérisée en ce que** au lieu du système pneumatique (2) et de l'accumulateur (4) est utilisé un intensificateur de la pression hydraulique (6).
